# EUROPÄISCHE PATENTSCHRIFT

(11) **EP 2 137 804 B1**
(45) Veröffentlichungstag und Bekanntmachung des Hinweises auf die Patenterteilung: **25.01.2012**
(21) Anmeldenummer: 08736141.6
(22) Anmeldetag: 11.04.2008
(51) Int. Cl.: H02K 9/24, H02K 55/04

(54) **KÜHLSYSTEM EINER SUPRALEITENDEN MASCHINE**
COOLING SYSTEM OF A SUPERCONDUCTING MACHINE
SYSTÈME DE REFROIDISSEMENT D'UNE MACHINE SUPRACONDUCTRICE

(30) Priorität: 16.04.2007 DE 102007017795
(43) Veröffentlichungstag der Anmeldung: 30.12.2009
(73) Patentinhaber: Siemens Aktiengesellschaft, 80333 München (DE)
(72) Erfinder: FRANK, Michael, 91080 Uttenreuth (DE); VAN HASSELT, Peter, 91058 Erlangen (DE)
(86) Internationale Anmeldenummer: PCT/EP2008/054430
(87) Internationale Veröffentlichungsnummer: WO 2008/125632

(56) Entgegenhaltungen:
- DE-A1- 10 321 463
- US-A- 3 223 075
- US-A- 4 553 505

## Beschreibung

Die Erfindung betrifft eine Maschineneinrichtung, die eine Maschine mit einer supraleitenden Rotorwicklung und ein Kühlsystem zur Kühlung der Rotorwicklung bzw. des Rotors umfasst. Kühlsysteme einer derartigen, beispielsweise aus DE 100 57 664 A1, DE 103 21 463 A1 und DE 100 39 964 A1 bekannten Einrichtung weisen häufig neigungsintolerante Komponenten auf, was beim Einsatz auf Schiffen oder Offshore-Plattformen problematisch ist. Bei ölgeschmierten Kompressoren beispielsweise ist es erforderlich, dass ein Ansaugbereich des Schmierkreislaufs stets innerhalb eines Ölvorrats bzw. Ölsumpfs angeordnet ist. Bei extremen Schräglagen sind daher zeitweise Unterbrechungen der Schmierung mit den sich daraus ergebenden negativen Folgen zu befürchten. Weiterhin besteht das Risiko, dass das komprimierte Arbeitsgas mit Öl verunreinigt wird, da Ölabscheider und -adsorber für einen vertikalen Betrieb konzipiert sind. Die Kühlung der supraleitenden Wicklung erfolgt vielfach durch schwerkraftbetriebene, auf dem Thermosiphon-Effekt beruhende Kühlkreisläufe. Zur Kühlung ist im Rotor ein sich axial erstreckender Hohlraum vorhanden, der mit einem Kältemittel, beispielsweise mit flüssigem Neon beschickt wird. Dazu ist an einem aus der Maschine herausragenden Ende der Rotorwelle ein koaxial positionierter Anschluss vorhanden, mit dem über eine oder zwei Leitungen ein sich an einer gegenüber dem Hohlraum des Rotors an einer geodätisch höher liegenden Position befindlicher Kondensor verbunden ist, in dem das Kühlmittel verflüssigt wird. Aufgrund seiner dann größeren Dichte fließt es in den Rotor zurück, wo es von der Wicklung abgegebene Wärme aufnimmt, dabei verdampft und zum Kondensor transportiert wird. Dort wird es erneut verflüssigt. Werden nun Maschineneinrichtungen mit derartigen Kühlkreisläufen auf Schiffen oder Off-Shore-Plattformen eingesetzt, kann der schwerkraftbetriebene Kühlkreislauf zum Erliegen kommen, so dass eine zuverlässige Wicklungskühlung nicht mehr gewährleistet werden kann.

Aufgabe der Erfindung ist es daher, die eine Maschine und ein dazugehörendes Kühlsystem umfassende Maschineneinrichtung der eingangs genannten Art so zu ertüchtigen, dass auch bei Schräglagen die Funktionsfähigkeit neigungsintoleranter Komponenten des Kühlsystems und damit eine zuverlässige Kühlung der supraleitenden Rotorwicklung gewährleistet ist.

Diese Aufgabe wird gemäß Anspruch 1 gelöst, indem wenigstens eine neigungsintolerante Komponente des Kühlsystems von einem eine Neigung der Maschineneinrichtung kompensierenden Träger gehalten ist. Durch geeignete Maßnahmen wird also der Träger, der beispielweise eine Plattform zur Aufnahme einer Komponente des Kühlsystems aufweist, unabhängig von der Neigung der Maschine in einer Position gehalten, in der die Komponenten zuverlässig und störungsfrei arbeiten. Die Stabilisierung des Trägers kann etwa mit Hilfe von Aktuatoren und entsprechenden Steuerungselementen erfolgen. Bei einer bevorzugten Ausführungsvariante, die einen relativ geringen technischen Aufwand erfordert, ist der Träger schwerkraftbetätigt. Dies kann etwa dadurch bewerkstelligt werden, dass er an Seilen oder Ketten aufgehängt ist. Eine derartige Ausgestaltung ist aber insbesondere für den Einsatz auf Schiffen nur bedingt geeignet. Eine bevorzugte Ausgestaltung der Schwerkraftbetätigung sieht daher vor, dass der Träger um wenigstens eine quer zu einer Vertikalachse der Einrichtung verlaufenden Rotationsachse schwenkbar gelagert ist, wobei sich der Schwerpunkt des Trägers unterhalb der Rotationsachse befindet. Die Schwenkbewegung des Trägers erfolgt in einer durch die Rotationsachse vorgegebenen eindeutigen Richtung. Außerdem lässt sich die Schwenklagerung so gestalten, dass sich die Rotationsachse in einer definierten Lage zur Maschine befindet. In vielen Fällen, insbesondere beim Einsatz einer Maschineneinrichtung auf Schiffen, reicht eine Schwenkbarkeit des Trägers um eine einzige, sich in Schiffslängsrichtung erstreckende Rotationsachse aus. Bei starkem Wellengang ist nämlich hauptsächlich die Bewegung eines Schiffes um seine Längsachse (Rollen) und weniger die Bewegung um die Querachse (Stampfen) problematisch.

In Anwendungsfällen, in denen eine vorgegebene Schwenkrichtung alleine nicht ausreicht, kann es zweckmäßig sein, wenn eine zweite Rotationsachse vorgesehen ist, die sich etwa quer zur ersten Rotationsachse erstreckt.

Für den Fall, dass sich der Schwerpunkt des mit Komponenten des Kühlsystems bestückten Trägers oberhalb seiner Rotationsachse befindet, ist bei einer bevorzugten Ausgestaltung eine stabilisierende Schwerpunktsverlagerung mit Hilfe eines Gegengewichts vorgesehen, wobei hier in besonders zweckmäßiger Weise eine Komponente des Kühlsystems, insbesondere ein oder mehrere Kompressoren als Gegengewicht dienen.

Bei einer weiteren bevorzugten Ausgestaltung fluchtet die Rotationsachse des Trägers mit der Rotationsachse des Rotors. Der stirnseitig an der Rotorwelle vorhandene, zur Anbindung des Kühlsystems dienende Anschluss führt daher gegenüber der Rotationsachse des Trägers und gegenüber einer mit dem Anschluss verbundenen Leitung des Kühlsystems keine Transversalbewegung aus. Die Leitung wird somit nicht einer Biegebeanspruchung, die ihre Lebensdauer verkürzen würde, ausgesetzt. Eine Biegebelastung von Leitungen wird auch dadurch verhindert, dass sämtliche über Leitungen miteinander verbundene Komponenten auf dem Träger angeordnet sind.

Die schwenkbare Lagerung des Trägers kann beispielsweise durch eine starre oder drehbare Achse erfolgen. Vorzugsweise ist er jedoch an einer kreisförmigen Kulisse gelagert. Eine solche, etwa als Kugel- oder Wälzlager ausgebildete Kulisse lässt sich leicht an einer von der Rotorwelle durchsetzten Gehäusewand der Maschine fixieren und zwar koaxial zur Rotorwelle, so dass deren Rotationsachse mit der Rotationsachse des Trägers fluchtet.

Die Erfindung wird nun unter Bezugnahme auf die beigefügten Zeichnungen näher erläutert. Es zeigen:

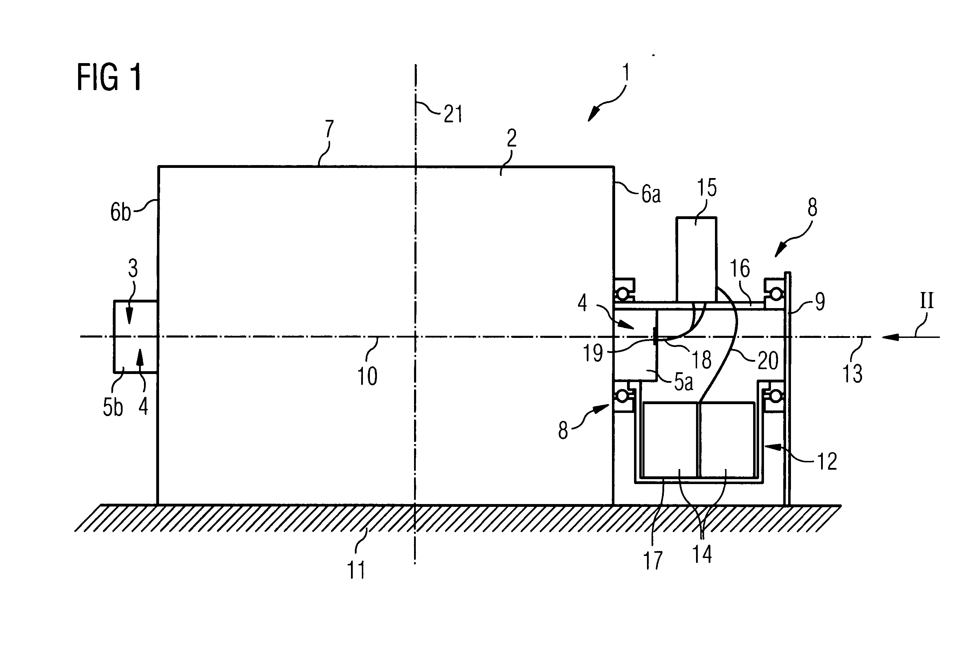

- Fig. 1: eine schematisierte Seitenansicht einer Maschineneinrichtung, und

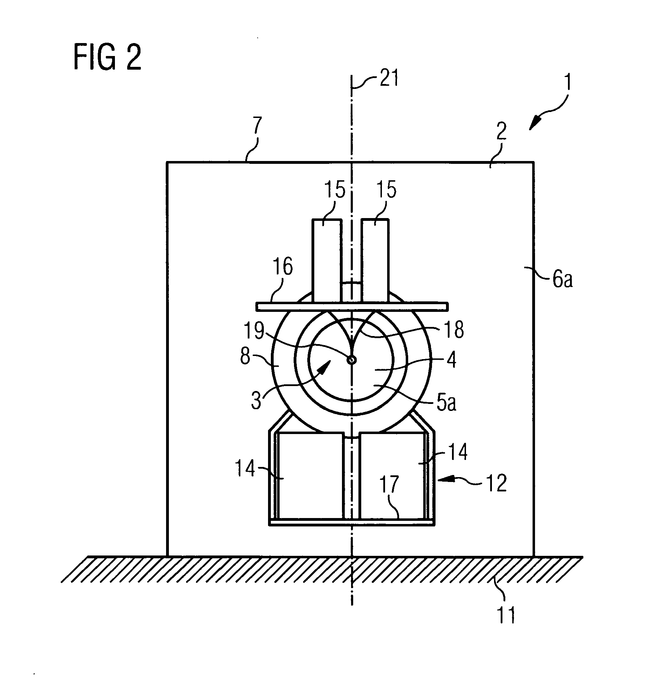

- Fig. 2: eine Draufsicht in Richtung des Pfeiles II in Fig. 1.

Die in den Abbildungen gezeigte Maschineneinrichtung 1 umfasst eine Maschine 2 und ein Kühlsystem. Die Maschine ist beispielsweise ein Synchron-Motor oder ein Generator mit einem eine supraleitende Wicklung aufweisenden Rotor 3, von dem in den Abbildungen nur die Rotorwelle 4 bzw. deren Endabschnitte 5a, 5b sichtbar sind, die aus Stirnwänden 6a,6b des Maschinengehäuses 7 heraus ragen. Der grundsätzliche Aufbau einer Maschine mit einer supraleitenden Wicklung ist aus den eingangs erwähnten Druckschriften bekannt, auf die hier explizit Bezug genommen wird. An der Stirnwand 6a ist eine kreisförmige Kulisse 8 angeordnet, wobei diese beispielsweise von einem Kugel- oder Wälzlager gebildet ist. An einem mit Abstand zur Stirnwand 6a positionierten Gestell 9 ist eine zweite Kulisse 8 fixiert, wobei diese ebenfalls als Wälz- oder Kugellager ausgebildet sein kann. Die Kulissen 8 sind koaxial zur Rotationsachse 10 des Rotors 3 angeordnet und dienen zur Lagerung eines Trägers 12. Aufgrund der koaxialen Anordnung der Kulissen 8 zur Rotationsachse 10 des Rotors 3 ist der Träger 12 um eine mit der Rotationsachse 10 fluchtenden Rotationsachse 13 schwenkbar. Beide Rotationsachsen 10,13 erstrecken sich quer zu einer Vertikalachse 21 der Maschine 2. Ortsfest am Träger fixiert ist das Kühlsystem, das unter anderem beispielsweise zwei Kompressoren 14 sowie beispielsweise zwei Kaltköpfe 15 umfasst. Letztere sind oberhalb und erstere unterhalb der Rotationsachse 13 positioniert. Die genannten Komponenten des Kühlsystems sind ortsfest am Träger 12 fixiert und stehen auf sich etwa horizontal erstreckenden Plattformen 16,17. Die Kompressoren 14 haben eine größere Masse als die Kaltköpfe 15, so dass der Schwerpunkt des Trägers 12 inklusive der darauf angeordneten Komponenten unterhalb der Rotationsachse 13 liegt. Dementsprechend verharrt der Träger 12 bei einer Verkippung der die Maschine 2 tragenden Unterlage 11, etwa einem Schiffsboden, schwerkraftbedingt in einer Stellung, in der die Plattformen 16,17 im Wesentlichen horizontal ausgerichtet sind, so dass Probleme der oben geschilderten Art ausgeschlossen sind.

Die Kaltköpfe 15 sind über eine Leitung 18 mit einem Anschluss 19 verbunden, der koaxial zur Rotationsachse 10 des Rotors 3 stirnseitig am Längsabschnitt 5a der Rotorwelle 5 angeordnet ist. Über die Leitung 18 und den Anschluss 19 gelangt ein Kältemittel, beispielsweise Neon, aus an den Kaltköpfen 15 vorhanden Kondensoren (nicht gezeigt), wie in den oben genannten Druckschriften näher beschrieben, in den Hohlraum des Rotors 3. Dort nimmt es die von der Rotorwicklung abgegebene Wärme auf, wodurch es verdampft. Es gelangt dann über die gleiche Leitung 18 wieder zurück zum Kaltkopf 15, wo es erneut verflüssigt wird. Die Kaltköpfe 15 sind über je ein Paar Druckleitungen 20 mit den Kompressoren 14 verbunden. In den Kompressoren 14 wird ein zweites Kältemittel, üblicherweise Helium, komprimiert und zu den Kaltköpfen 15 geleitet.

## Patentansprüche

1. Supraleitende Maschineneinrichtung (1) mit einer Maschine (2), die einen eine supraleitende Wicklung aufweisenden Rotor (3) umfasst, und mit einem wenigstens eine neigungsintolerante Komponente aufweisenden Kühlsystem zur Kühlung der Wicklung, **dadurch gekennzeichnet, dass** die wenigstens eine Komponente von einem eine Neigung der Maschineneinrichtung kompensierenden Träger (12) gehalten ist.

2. Maschineneinrichtung nach Anspruch 1, mit einem schwerkraftbetätigten Träger (12).

3. Maschineneinrichtung nach Anspruch 2, bei dem der Träger (12) um wenigstens eine quer zu einer Vertikalachse (21) der Maschine (2) verlaufenden Rotationsachse (13) schwenkbar ist, wobei sich der Schwerpunkt des Trägers (12) an einer unterhalb seiner Rotationsachse (13) liegenden Position befindet.

4. Maschineneinrichtung nach Anspruch 3, bei der die Position des Schwerpunkts durch ein auf dem Träger (12) angeordnetes Gegengewicht erreicht wird.

5. Maschineneinrichtung nach Anspruch 4, bei der als Gegengewicht eine auf dem Träger positionierte Komponente des Kühlsystems dient.

6. Maschineneinrichtung nach einem der vorhergehenden Ansprüche, bei der die Rotationsachse (13) des Trägers (12) mit der Rotationsachse (10) des Rotors (3) fluchtet.

7. Maschineneinrichtung nach einem der vorhergehenden Ansprüche, bei dem sämtliche über Leitungen (18,20) miteinander verbundene Komponenten auf dem Träger (12) angeordnet sind.

8. Maschineneinrichtung nach einem der Ansprüche 3 bis 7, bei der der Träger (12) an wenigstens einer kreisförmigen Kulisse (8) gelagert ist.

## Claims

1. Superconducting machine device (1) having a machine (2) which has a rotor (3) which has a superconducting winding, and having a cooling system, which has at least one inclination-intolerant component, for cooling of the winding, **characterized in that** the at least one component is held by a mount (12) which compensates for any inclination of the machine device.

2. Machine device according to Claim 1, having a mount (12) which is operated by the force of gravity.

3. Machine device according to Claim 2, in which the mount (12) can pivot about at least one rotation axis (13) which runs transversely with respect to a vertical axis (21) of the machine (2), wherein the centre of gravity of the mount (12) is located at a position below its rotation axis (13).

4. Machine device according to Claim 3, in which the position of the centre of gravity is achieved by a counterweight, which is arranged on the mount (12).

5. Machine device according to Claim 4, in which a cooling-system component which is positioned on the mount is used as the counterweight.

6. Machine device according to one of the preceding claims, in which the rotation axis (13) of the mount (12) is aligned with the rotation axis (10) of the rotor (3).

7. Machine device according to one of the preceding claims, in which all of the components which are connected to one another via lines (18, 20) are arranged on the mount (12).

8. Machine device according to one of Claims 3 to 7, in which the mount (12) is mounted on at least one circular guide (8).

## Revendications

1. Dispositif ( 1 ) de machine supraconducteur ayant une machine ( 2 ), qui comprend un rotor ( 3 ) ayant un enroulement supraconducteur et ayant un système de refroidissement comportant au moins un élément intolérant à l'inclinaison et destiné au refroidissement de l'enroulement, **caractérisé en ce que** le au moins un élément est maintenu par un support ( 12 ) compensant une inclinaison du dispositif de machine.

2. Dispositif de machine suivant la revendication 1, comprenant un support ( 2 ) actionné par la force de gravité.

3. Dispositif de machine suivant la revendication 2, dans lequel le support ( 12 ) est pivotant autour d'au moins un axe ( 13 ) de rotation s'étendant transversalement à un axe ( 21 ) vertical de la machine ( 2 ), le centre de gravité du support ( 2 ) se trouvant en une position en dessous de son axe ( 13 ) de rotation.

4. Dispositif de machine suivant la revendication 3, dans lequel la position du centre de gravité est obtenue par un contrepoids placé sur le support ( 12 ).

5. Dispositif de machine suivant la revendication 4, dans lequel on se sert comme contrepoids d'un élément du système de refroidissement placé sur le support.

6. Dispositif de machine suivant l'une des revendications précédentes, dans lequel l'axe ( 13 ) de rotation du support ( 12 ) est aligné avec l'axe ( 10 ) de rotation du rotor ( 3 ).

7. Dispositif de machine suivant l'une des revendications précédentes, dans lequel tous les éléments liés entre eux par des conduits ( 18, 20 ) sont disposés sur le support ( 12 ).

8. Dispositif de machine suivant l'une des revendications 3 à 7, dans lequel le support ( 12 ) est monté sur au moins une coulisse ( 8 ) circulaire.
